# EUROPÄISCHE PATENTANMELDUNG

(11) **EP 3 444 780 A1**
(43) Veröffentlichungstag der Anmeldung: **20.02.2019**
(21) Anmeldenummer: 17186847.4
(22) Anmeldetag: 18.08.2017
(51) Int. Cl.: G06T 7/33

(54) **VERFAHREN ZUM REGISTRIEREN VON WENIGSTENS ZWEI VERSCHIEDENEN 3D-MODELLEN**

(71) Anmelder: a.tron3d GmbH, 9020 Klagenfurt am Wörthersee (AT)
(72) Erfinder: JESENKO, Juergen, 9587 Riegersdorf (AT); REICHMANN, Andrej, 9073 Klagenfurt-Viktring (AT)
(74) Vertreter: Beer & Partner Patentanwälte KG

(57) **Zusammenfassung**

Bei einem Verfahren zum Registrieren von wenigstens zwei verschiedenen 3D-Modellen, wobei die Modelle wenigstens bereichsweise dasselbe Objekt abbilden, werden die folgenden Schritte durchgeführt:
a. Erkennen von Features in den 3D-Modellen,
b. Beschreiben der Features der 3D-Modelle anhand ihrer Umgebung,
c. Zuordnen von Features des ersten 3D-Modells zu den Features des zweiten 3D-Modells aufgrund möglichst ähnlicher Beschreibungen aus Schritt b., wobei zu jedem Feature des ersten 3D-Modells ein Feature des zweiten 3D-Modells ermittelt wird, und Notieren der ersten Zuordnungen als Vektoren,
d. Zuordnen der Features des zweiten 3D-Modells zu den Features des ersten 3D-Modells aufgrund möglichst ähnlicher Beschreibungen aus Schritt b., wobei zu jedem Feature des zweiten 3D-Modells ein Feature des ersten 3D-Modells ermittelt wird, und Notieren der zweiten Zuordnungen als Vektoren,
e. Vergleichen der Vektoren der ersten Zuordnungen und der Vektoren der zweiten Zuordnungen und Ermitteln gemeinsamer, bijektiver Vektoren beider Zuordnungen,
f. zufällige Auswahl wenigstens dreier bijektiver Vektoren aus den in Schritt e. ermittelten, bijektiven Vektoren,
g. Anwenden der ausgewählten Vektoren auf das erste 3D-Modell und Überprüfen, ob die Vektoren gemeinsame Punkte des ersten 3D-Modells mit dem zweiten 3D-Modell auf gemeinsame Punkte des zweiten 3D-Modells mit dem ersten 3D-Modell im Wesentlichen abbilden,
h. wenn das Überprüfen aus Schritt g. erfolgreich ist, Verwenden der ausgewählten Vektoren als Basis für das Erzeugen einer vollständigen Transformation des ersten 3D-Modells zu einem Koordinatensystem des zweiten Modells,
k. wenn das Überprüfen aus Schritt g. nicht erfolgreich ist, Verwerfen aller Vektoren und wiederholen des Verfahrens mit anderen, insbesondere neuen, Daten zu wenigstens einem der 3D-Modelle.

## Beschreibung

Die Erfindung betrifft ein Verfahren zum Registrieren von wenigstens zwei verschiedenen 3D-Modellen, wobei die Modelle wenigstens bereichsweise dasselbe Objekt abbilden.

In der Technologie zum Erfassen von dreidimensionalen Oberflächengeometrien gibt es das andauernde Bestreben nach höherer Geschwindigkeit und Präzision beim Erfassen der Geometrie. Ein offenkundiger Schritt, um diesem Streben nachzukommen, ist die kontinuierliche Verbesserung der Hardware sowohl im Bereich der Sensortechnik als auch der Computer, welche die wachsende Datenmenge der besseren Sensoren zunehmend schneller verarbeiten. Ebenso wichtig wie die Hardware sind aber auch die Softwarekomponenten beim Erfassen von dreidimensionalen Oberflächengeometrien. Diese lassen sich ihren Aufgaben entsprechend grob in drei Kategorien einteilen: Überführen der Sensordaten zu virtuellen 3D-Modellen, Darstellung bzw. Rendering und Notation bzw. Speicherung. Dabei haben die einzelnen Kategorien entscheidenden Einfluss aufeinander. So sind beispielsweise bestimmte Methoden, um Sensordaten in virtuelle Modelle zu überführen, nur für bestimmte Notationen geeignet und unterschiedlich notierte Modelle bedürfen unterschiedlicher Schritte, um diese in einer für den Nutzer geeigneten Form darzustellen.

Eine für das Erzeugen von 3D-Modellen besonders geeignete Notation ist die "Truncated Signed Distance Function" (TSDF). Der größte Vorteil der TSDF ist, dass ein Ergänzen eines in einer TSDF notierten virtuellen 3D-Modells durch weitere Sensordaten des erfassten Objektes mathematisch beweisbar immer zu einer Verbesserung der Genauigkeit des virtuellen 3D-Modells führt. Bei den sonst üblichen Notationen kann es hingegen zu einem Verfälschen der Daten kommen.

Sollen allerdings mehrere eigenständige Modelle, beispielsweise die linke und die rechte Hälfte der Zahnreihe eines Kiefers oder die Zahnreihen eines Ober- und eines Unterkiefers, in einer Notation zusammengeführt werden, hat sich die TSDF als nachteilig erwiesen. Hierfür ist vor allem der Umstand verantwortlich, dass eine TSDF, als implizite Notation, stärker als andere, insbesondere explizite, Notationen an das Koordinatensystem, in welchem sie notiert ist, gebunden ist.

Der Erfindung liegt daher die Aufgabe zu Grunde, den oben beschrieben Nachteil zu überwinden und eine verbesserte Methode zur Verfügung zu stellen, um verschiedene 3D-Modelle zueinander zu registrieren, die wenigstens bereichsweise dasselbe Objekt abbilden.

Gelöst wird diese Aufgabe erfindungsgemäß durch ein Verfahren mit den Merkmalen des Anspruchs 1.

Registriert im Sinne der Erfindung bedeutet dabei, dass zu den wenigstens zwei Modellen das genaue räumliche Verhältnis bekannt ist, in dem die beiden zueinander stehen. Dieses räumliche Verhältnis kann beispielsweise in Form einer Translationsmatrix notiert sein.

Eine Translationsmatrix besteht üblicherweise aus einer Rotationsmatrix und einem Translationsvektor, d.h. der Information, wie und in welchen Raumdimensionen ein Modell, respektive das System, in welchem das Modell notiert ist, gedreht und verschoben werden muss, um auf das andere Modell, respektive das System, in welchem das andere Modell notiert ist, abgebildet zu werden.

Bevorzugte Ausführungsformen der Erfindung sind Gegenstand der Unteransprüche.

Weitere Merkmale und Vorteile der Erfindung ergeben sich aus der nachfolgenden Beschreibung bevorzugter, den Schutzbereich nicht beschränkender, Ausführungsbeispiele der Erfindung unter Bezugnahme auf die angeschlossenen Zeichnungen. Es zeigt:
- Fig. 1: ein Verfahren zum Vereinfachen eines in einer TSDF notierten 3D-Modells,
- Fig. 2: einen Vorverarbeitungsschritt zum Verfahren von Fig. 3,
- Fig. 3: ein beispielhaftes, erfindungsgemäßes Verfahren zum Registrieren von 3D-Modellen,
- Fig. 4: eine schematisierte Darstellung eines Details aus Fig. 3,
- Fig. 5: ein erstes Anwendungsbeispiel für das erfindungsgemäße Verfahren und
- Fig. 6: ein zweites Anwendungsbeispiel für das erfindungsgemäße Verfahren.

Im dargestellten Ausführungsbeispiel der Erfindung werden die beiden TSDF, welche später zueinander registriert werden sollen, zunächst vereinfacht. Dies ist zwar für das eigentliche Verfahren zum Registrieren nicht erforderlich, allerdings können dadurch Rechenzeit und Rechenressourcen gespart werden und im Versuch hat sich gezeigt, dass das Vereinfachen die Genauigkeit des Verfahrens nicht negativ beeinflusst. Ein Vereinfachen der TSDF vor dem Ausführen der übrigen Schritte des Verfahrens ist daher eine vorteilhafte und bevorzugte Weiterbildung des erfindungsgemäßen Verfahrens.

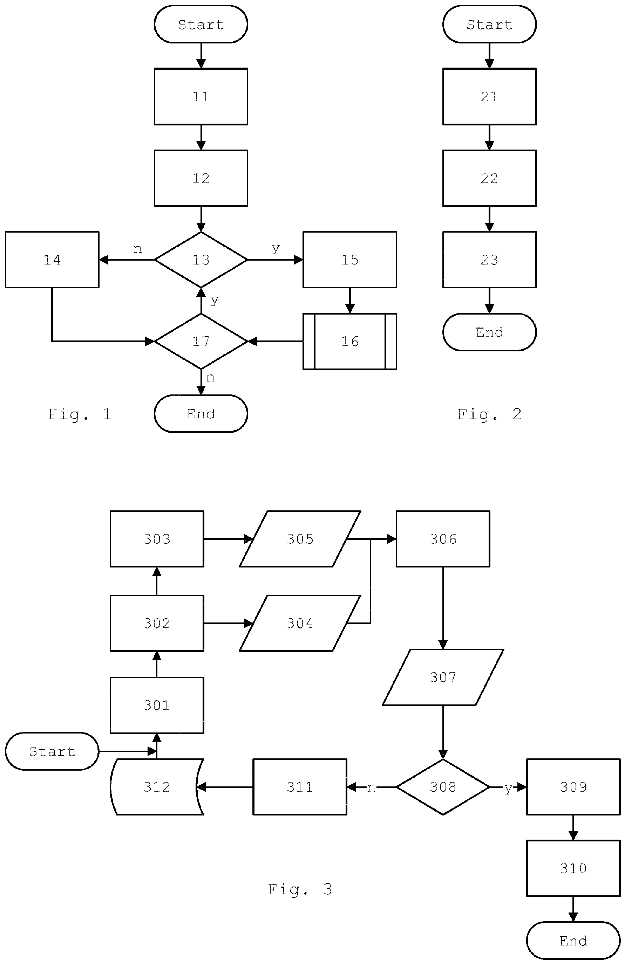

Fig. 1 zeigt ein mögliches Beispiel für das Vereinfachen einer TSDF. Dabei wird die TSDF zunächst in einem Schritt 11 geladen. Laden kann in diesem Fall sowohl das Abrufen aus einem Speicher oder Zwischenspeicher als auch das direkte Aufnehmen eines "frischen" 3D-Modells sein. Der Ursprung bzw. die Herkunft des 3D-Modells ist für die Erfindung jedenfalls unerheblich.

In einem nächsten Schritt 12 wird die TSDF in sogenannte Bricks unterteilt. Dabei werden die Voxel des Voxelgrids, in welchen die TSDF hinterlegt ist, zu Gruppen zusammengefasst. Ein Brick kann dabei beispielsweise eine Gruppe von 8³ Voxeln sein. Grundsätzlich wird dabei das gesamte Voxelgrid in Bricks unterteilt.

Im darauffolgenden Schritt 13 erfolgt die Abfrage, ob sich in einem Brick eine Oberfläche befindet. Dies kann beispielsweise erfolgen, indem überprüft wird, ob innerhalb des Bricks ein Vorzeichenwechsel stattfindet. Da in den Voxeln einer TSDF ("Truncated Signed Distance Function") immer der Abstand ("Distance") des Voxels zur nächstgelegenen Oberfläche angegeben wird, und das Vorzeichen des Abstandes ("Signed Distance") angibt, ob sich das Voxel in Richtung der Distanzangabe vor oder hinter der Oberfläche befindet, ist ein Vorzeichenwechsel der Werte in den Voxeln ein einfacher Weg zu überprüfen, ob sich in einem Brick eine Oberfläche befindet. Wenn sich in einem Brick keine Oberfläche befindet, wird das Brick in Schritt 14 verworfen. Wird die Abfrage aus Schritt 13 positiv beantwortet und das Brick enthält eine Oberfläche, wird es in Schritt 15 für die weitere Verwendung vorgemerkt bzw. markiert. Wurde ein Brick in Schritt 15 markiert, kann ihm in Schritt 16 ein Punkt zugewiesen werden. Hierfür gibt es verschiedene Möglichkeiten. So kann der Punkt beispielsweise in einer sehr einfachen Ausführungsform in der Mitte des Bricks liegen. Nach Schritt 14 oder 16 wird in einem Schritt 17 überprüft, ob es noch (wenigstens) ein Brick gibt, für das nicht bestimmt wurde, ob es eine Oberfläche enthält. Gibt es noch ein Brick, für das nicht bestimmt wurde, ob es eine Oberfläche enthält, geht es zurück zu Schritt 13. Gibt es keine Bricks mehr, für die noch nicht überprüft wurde, ob sie eine Oberfläche enthalten, kann der Prozess beendet werden.

Fig. 2 zeigt beispielhaft ein Verfahren, um zu Features zu gelangen, wie sie für das weitere Verfahren verwendet werden können. Dazu wird in einem Schritt 21 zunächst das vereinfachte Modell aus Fig. 1 zur Verfügung gestellt. Im darauffolgenden Schritt 22 wird dann für jeden Punkt des vereinfachten Modells überprüft, wie sich die räumliche Nachbarschaft des Punktes zu diesem verhält. Befindet sich der Punkt auf einer im Wesentlichen gleichbleibenden Ebene, wird er als uninteressant eingestuft und übergangen. Befindet sich der Punkt hingegen in einem Tal oder an einer Spitze, wird er als Feature betrachtet. Um zu ermitteln, ob sich ein Punkt in einer Ebene befindet, wird getestet, ob sich mögliche Verbindungen zu benachbarten Punkten in einer Ebene befinden oder nicht, d.h. ob sich die Geometrie des Modells an dieser Stelle stark ändert oder nicht. Wenn sich dabei die Geometrie in mehr Richtungen ändert, wird das Feature als eindeutiger betrachtet, als wenn es sich in weniger Richtungen ändert.

Befinden sich alle (gedachten) Verbindungen zu den benachbarten Punkten eines Punkte im Wesentlichen in einer Ebene, wird der Punkt allgemein als in einer Ebene befindlich betrachtet. Befinden sich die (gedachten) Verbindungen eines Punktes zu seinen benachbarten Punkten im Wesentlichen in zwei Ebenen, wird der Punkt allgemein als an einer Kante befindlich betrachtet. Befinden sich die Verbindungen von einem Punkt zu seinen benachbarten Punkten in drei oder mehr Ebenen, wird er allgemein als Spitze oder Vertiefung betrachtet. Bevorzugt werden nur jene Punkte, die Spitzen oder Vertiefungen sind, als Features ausgewählt. Dieses Verfahren ist dabei stark an den aus dem Stand der Technik bekannten "Harris Feature Detector" angelehnt.

Nachdem in Schritt 22 die Features ausgewählt wurden, werden sie in Schritt 23 anhand ihrer Umgebung beschrieben. Im dargestellten, beispielhaften Verfahren handelt es sich bei dieser Beschreibung um einen dreiunddreißig-dimensionalen Vektor.

Es ist zu beachten, dass die Nachbarschaft des Punktes aus Schritt 22 und die in Schritt 23 anhand des dreiunddreißig-dimensionalen Vektors beschriebene Umgebung nicht gleichzusetzen sind. Während die Nachbarschaft lediglich bestimmt, ob ein Punkt als Feature im Sinne der Erfindung geeignet ist, beschreibt die Umgebung die genauen Eigenschaften eines Features und ermöglicht es so, das Feature in späteren Schritten zu bewerten, insbesondere mit anderen Features zu vergleichen.

Selbstverständlich sind auch andere Notationen als dreiunddreißig-dimensionale Vektoren für die Features denkbar. Wichtig ist nur, dass die Notation die Features hinreichend unterscheidbar notieren kann, d.h. dass sie als Feature-Deskriptor geeignet ist. Ein aus dem Stand der Technik bekanntes Beispiel für ein für einen Feature-Deskriptor, der als dreiunddreißig-dimensionaler Vektor notiert wird, ist beispielsweise das sogenannte FPFH ("Fast Point Feature Histogram"). Beispielhaft, jedoch nicht limitierend, seien als weitere Beispiele genannt: PFH ("Point Feature Histogram"), "3D Shape Conext", GRSD ("Global Radius-based Surface Descriptor") und SHOT ("Signature of Histograms of OrienTations").

Für das in Fig. 3 gezeigte Verfahren werden zuerst die in Fig. 1 und Fig. 2 beschriebenen Subverfahren auf zwei zu registrierende 3D-Modelle im TSDF-Format angewandt. Liegen die 3D-Modelle in einer anderen Notation vor, können selbstverständlich andere als die in Fig. 1 und Fig. 2 gezeigten Verfahren angewandt werden, um zu den Ausgangsdaten für das in Fig. 3 beispielhaft beschriebene, erfindungsgemäße Verfahren zu gelangen. Ebenso können auch auf 3D-Modelle im TSDF-Format andere Verfahren angewandt werden.

In Schritt 301 werden dementsprechend Features zweier 3D-Modelle, welche anhand ihrer Umgebung, beispielsweise anhand der oben genannten dreiunddreißig-dimensionalen Vektoren, beschrieben sind, zur Verfügung gestellt. Dies kann beispielsweise durch Datenübertragung oder Laden aus einem Speicher oder auch aus einer GPU erfolgen. Die exakte Quelle der für das Verfahren verwendeten, anhand ihrer (geometrischen) Umgebung beschriebenen Features ist für die Erfindung nebensächlich und der Fachmann kann aus dem Stand der Technik ein entsprechendes Verfahren wählen, ohne den Kern der Erfindung zu verändern. Beispielhaft, jedoch nicht limitierend, seien an dieser Stelle genannt: "Harris Feature Detector", CenSurE ("Centre Surround Extremas"), ISS ("Intrinsic Shape Signatures"), NARF ("Normal Aligned Radial Feature"), SIFT ("Scale Invariant Feature Transform"), SUSAN ("Smallest Univalue Segment Assimilating Nucleus") und AGAST ("Adaptive and Generic Accelerated Segment Test").

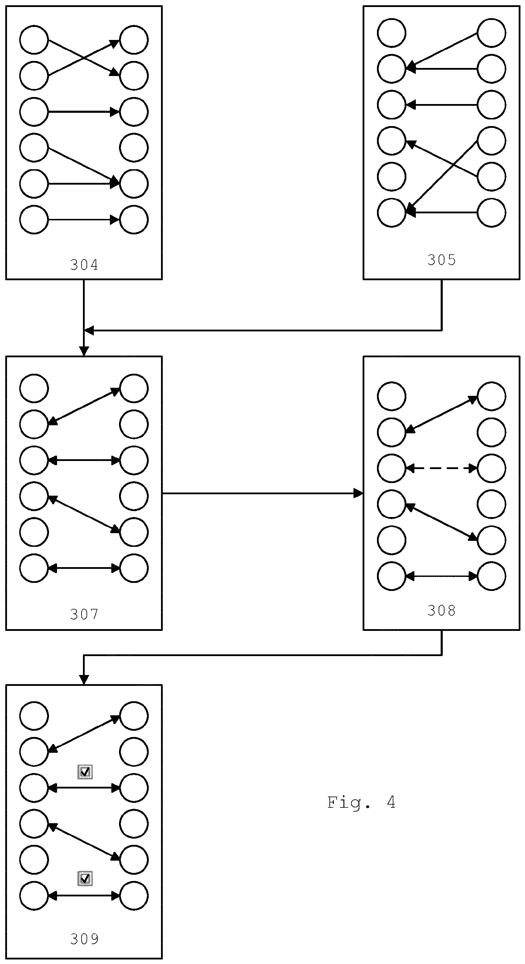

In Schritt 302 erfolgt dann das sogenannte "Forward Matching". Dabei wird jedem Feature des ersten 3D-Modells ein Feature des zweiten 3D-Modells aufgrund möglichst ähnlicher Beschreibungen, im dargestellten Beispiel also anhand möglichst großer Ähnlichkeit der dreiunddreißig-dimensionalen Vektoren, zugeordnet. Hierfür kann beispielsweise der sogenannte "nearest neighbor Algorithmus" verwendet werden. Dabei kann es sowohl vorkommen, dass Features des zweiten 3D-Modells doppelt belegt werden oder auch, dass Features des zweiten 3D-Modells keinem Feature des ersten Modells zugeordnet werden. Diese ersten Zuordnungen werden dann in Schritt 304 als Vektoren notiert. Eine grob schematisierte, stark vereinfachte, zweidimensionale und für die Veranschaulichung auf sechs symbolische Features je Modell reduzierte Darstellung der Zuordnungen von Schritt 304 zeigt Fig. 4.

Analog werden dann in Schritt 303 allen Features des zweiten 3D-Modells Features aus dem ersten 3D-Modell zugeordnet und in Schritt 305 die daraus resultierenden, zweiten Zuordnungen als Vektoren notiert. Dies kann auch als "Backward Matching" bezeichnet werden. Schritt 305 ist in einer entsprechend simplifizierten Form ebenfalls in Fig. 4 dargestellt.

In Schritt 306 werden dann die ersten und zweiten Zuordnungen miteinander verglichen. Dabei werden alle Zuordnungen ermittelt, die einer bijektiven Abbildung entsprechen, also jene, welche dieselben Features des ersten 3D-Modells auf das zweite 3D-Modell abbilden und umgekehrt. Diese bijektiven Zuordnungen bzw. Vektoren oder auch Matchings werden dann in Schritt 307 notiert. Eine zu den Schritten 304 und 305 analoge Darstellung des Schrittes 307 ist ebenfalls in der zuvor angeführten Weise in Fig. 4 dargestellt.

Im darauffolgenden Schritt 308 werden wenigstens drei der bijektiven Vektoren zufällig ausgewählt, wie dies auch im entsprechenden Schritt 308 in Fig. 4 dargestellt ist. Die zufällig ausgewählten Machtings bzw. Vektoren werden dann auf das erste der 3D-Modelle angewandt.

Danach wird überprüft, ob durch das Anwenden der Vektoren das erste 3D-Modell mit jenen Bereichen, die das erste 3D-Modell mit dem zweiten 3D-Modell gemeinsam hat, auf das zweite 3D-Modell, insbesondere auf jenen Bereichen des zweiten 3D-Modells, die das zweite 3D-Modell mit dem ersten gemeinsam hat, im Wesentlichen abgebildet wird. Dies kann im Rahmen von geringen Toleranzen erfolgen, insbesondere da in einem späteren Schritt eine weitere, feinere Transformation durchgeführt wird.

War dieser Test erfolgreich, werden erfolgreich getestete Vektoren in Schritt 309 als Basis für eine grobe Transformation verwendet. In einem weiteren Schritt 310 wird die Transformation dann mittels des dem Fachmann bekannten ICP-Algorithmus (Iterative Closest Point Algorithm) verfeinert bzw. präzisiert. Danach kann das Verfahren abgeschlossen werden. Dabei erfolgt das Verfeinern bevorzugt auf Basis der Voxel der beiden ursprünglichen TSDF und nicht auf Basis der im Sub-Verfahren von Fig. 1 gewonnenen Bricks.

Die Verfeinerung mittels ICP bietet weiters auch eine Möglichkeit, die Richtigkeit der ermittelten Registrierung zu überprüfen. Ist der ICP-Fehler, d.h. die Distanzen zwischen den laut ICP korrespondierenden Punkten, nach dem Verfeinern zu groß, kann die Grobregistrierung gemäß einer bevorzugten Weiterbildung der Erfindung wieder verworfen werden.

Wenn der Test aus Schritt 308 zu einem negativen Ergebnis führt, werden die Matchings in Schritt 311 verworfen. Unter Umständen können außerdem auch alle Features verworfen werden.

In Schritt 312 werden dem Verfahren dann neue Daten zur Verfügung gestellt, mit denen die Schritte 301 bis 308 wiederholt werden. Bei diesen neuen Daten kann es sich beispielsweise um neu ermittelte Features handeln. Bevorzugt werden dafür nicht nur die vorhandenen 3D-Modelle neu auf Features hin untersucht, sondern es wird wenigstens ein 3D-Modell um zusätzliche Oberflächeninformationen erweitert. Methoden, einem 3D-Modell (insbesondere einem in einer TSDF notierten 3D-Modell) zusätzliche Oberflächeninformationen hinzuzufügen, sind beispielsweise aus EP 2 672 461 A1 und EP 2 886 043 A1 bekannt. Die neuen Daten in Schritt j. des erfindungsgemäßen Verfahrens können daher auch aus den alten Daten des Verfahrens bestehen, die lediglich um die Daten einer 2D-Aufnahme zu einem der 3D-Modelle ergänzt wurden. Wie ein 3D-Modell um die Daten einer 2D-Aufnahme ergänzt werden kann, ist ebenfalls in den zuvor beispielhaft genannten Schriften erläutert.

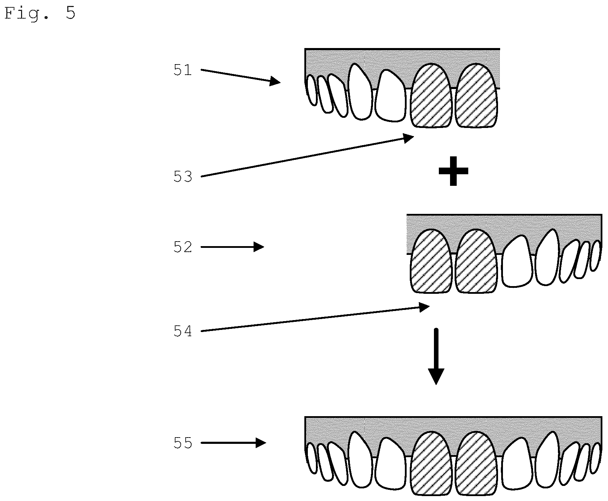

Fig. 5 zeigt stark schematisiert ein erstes Anwendungsbeispiel des erfindungsgemäßen Verfahrens, bei welchem zwei 3D-Modelle 51, 52 zusammengeführt werden. Im ersten 3D-Modell 51 sind mit dem zweiten 3D-Modell 52 gemeinsame Bereiche 53 symbolisch dargestellt. Im zweiten 3D-Modell sind mit dem ersten 3D-Modell 52 gemeinsame Bereiche 54 symbolisch dargestellt. Nachdem das erste 3D-Modell 51 mit seinem mit dem zweiten 3D-Modell 52 gemeinsamen Bereich 53 auf den entsprechenden, gemeinsamen Bereich 54 des zweiten 3D-Modells 52 abgebildet wurde, entsteht ein gemeinsames 3D-Modell 55.

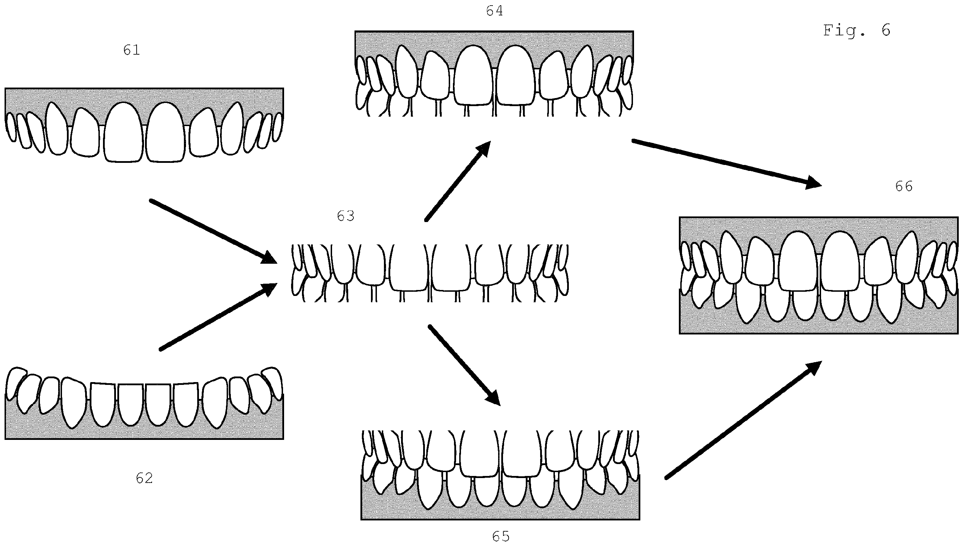

Fig. 6 zeigt stark schematisiert ein zweites Anwendungsbeispiel des erfindungsgemäßen Verfahrens, bei dem zwei 3D-Modelle 61, 62 über ein drittes 3D-Modell 63 regstriert werden. Das erste 3D-Modell 61 in Fig. 6 zeigt dabei symbolisch einen Oberkiefer. Das zweite 3D-Modell 62 in Fig. 6 zeigt symbolisch einen Unterkiefer. Das dritte 3D-Modell in Fig. 6 zeigt symbolisch einen nur bereichsweise bekannten Biss der beiden Kiefer. Das dritte Modell ist mit einem Bissregistrat, wie es in der herkömmlichen Zahntechnik zur Bestimmung der Kieferrelation verwendet wird, vergleichbar. Ähnlich wie bei einem Bissregistrat, das nur die Kauflächen von Ober- und Unterkiefer beim Zubeißen abbildet, zeigt das dritte 3D-Modell 63 lediglich einen Teil der Außenseiten der Zähne von Ober- und Unterkiefer beim Zubeißen, da es für einen 3D-Scanner während des Zubeißens nicht möglich ist, die Kauflächen oder Innenseiten (lingualen Seiten) der Zähne zu erfassen.

In dem in Fig. 6 gezeigten Anwendungsbeispiel der Erfindung wird daher zum Erfassen der korrekten Kieferrelation zusammen mit einem vollständigen Modell von Ober- und Unterkiefer zunächst das erste 3D-Modell 61 mit dem dritten 3D-Modell 63 zu einer ersten Zwischenregistrierung 64 registriert. Dann wird das zweite 3D-Modell 62 mit dem dritten 3D-Modell 63 zu einer zweiten Zwischenregistrierung 65 registriert. Da über beide Zwischenregistrierungen 64, 65 die räumliche Relation des ersten und zweiten 3D-Modells 61, 62 zum dritten 3D-Modell 63 bekannt ist, ist auch indirekt das räumliche Verhältnis des ersten und zweiten 3D-Modells 61, 62 zueinander bekannt. In einem finalen Schritt können beide Zwischenregistrierungen 64, 65 zu einem finalen Datensatz 66 zusammengeführt werden. Der finale, zusammengeführte Datensatz 66 beinhaltet dann die geometrischen Informationen zum Ober- und Unterkiefer sowie eine dem Biss entsprechende Kieferkorrelation.

Die in Fig. 6 gezeigten Zwischenregistrierungen 64, 65 dienen dabei lediglich der Veranschaulichung. Es ist nicht erforderlich, die kompletten ersten und zweiten 3D-Modelle vollständig mit dem dritten 3D-Modell zusammen zu führen. Es genügt, lediglich eine entsprechende Translationsmatrix bestehend aus einem Translationsvektor und einer Rotationsmatrix zum jeweiligen Modell zu hinterlegen. Die beiden Translationsmatrizen können dann mit einer einfachen geometrischen Operation so zusammengefügt werden, dass Ober- und Unterkiefer im vierten 3D-Modell korrekt zueinander positioniert sind.

### Beschriftung der Figuren

- 11: TSDF Laden
- 12: In Bricks unterteilen
- 13: hat Brick Vorzeichenwechsel? (=Oberfläche in Brick?)
- 14: (13 -> n) Brick verwerfen
- 15: (13 -> y) Brick für weiteren Prozess vormerken
- 16: Brick Punkt zuweisen
- 17: gibt es noch unüberprüfte Bricks? n => Ende, y => zurück zu Schritt 13

- 21: Zur Verfügung stellen der vereinfachten Modelle
- 22: Bestimmen der Features
- 23: Beschreiben und Notieren aller Features anhand ihrer Umgebung

- 301: Zur Verfügung stellen der Features, beschrieben anhand ihrer Umgebung
- 302: Forward Matching
- 303: Backward Matching
- 304: Ergebnisse aus Forward Matching
- 305: Ergebnisse aus Backward Matching
- 306: Überprüfen auf übereinstimmende Matchings (bijektiv)
- 307: Übereinstimmende Matchings
- 308: Testen der übereinstimmenden Matchings mittels RanSaC (min drei random samples für den Random Sample Consensus) Test via RanSaC OK? // Lösung gefunden?
- 309: (38 -> y) Grobe Transformation
- 310: ICP (feine/genaue Transformation)
- 311: (38 -> n) Matching verwerfen
- 312: neue Daten

- 51: erstes 3D-Modell
- 52: zweites 3D-Modell
- 53: Bereich des ersten 3D-Modells, den dieses mit dem zweiten 3D-Modell gemeinsam hat
- 54: Bereich des zweiten 3D-Modells, den dieses mit dem ersten 3D-Modell gemeinsam hat
- 55: registriertes 3D-Modell

- 61: erstes 3D-Modell (Oberkiefer)
- 62: zweites 3D-Modell (Unterkiefer)
- 63: drittes 3D-Modell (Bissregistrat)
- 64: erste Zwischenregistrierung
- 65: zweite Zwischenregistrierung
- 66: viertes 3D-Modell (Oberkiefer, Unterkiefer und Kieferkorrelation)

## Patentansprüche

1. Verfahren zum Registrieren von wenigstens zwei verschiedenen 3D-Modellen, wobei die Modelle wenigstens bereichsweise dasselbe Objekt abbilden, **dadurch gekennzeichnet, dass** das Verfahren die folgenden Schritte beinhaltet:
a. Erkennen von Features in den 3D-Modellen,
b. Beschreiben der Features der 3D-Modelle anhand ihrer Umgebung,
c. Zuordnen von Features des ersten 3D-Modells zu den Features des zweiten 3D-Modells aufgrund möglichst ähnlicher Beschreibungen aus Schritt b., wobei zu jedem Feature des ersten 3D-Modells ein Feature des zweiten 3D-Modells ermittelt wird, und Notieren der ersten Zuordnungen als Vektoren,
d. Zuordnen der Features des zweiten 3D-Modells zu den Features des ersten 3D-Modells aufgrund möglichst ähnlicher Beschreibungen aus Schritt b., wobei zu jedem Feature des zweiten 3D-Modells ein Feature des ersten 3D-Modells ermittelt wird, und Notieren der zweiten Zuordnungen als Vektoren,
e. Vergleichen der Vektoren der ersten Zuordnungen und der Vektoren der zweiten Zuordnungen und Ermitteln gemeinsamer, bijektiver Vektoren beider Zuordnungen,
f. zufällige Auswahl wenigstens dreier bijektiver Vektoren aus den in Schritt e. ermittelten, bijektiven Vektoren,
g. Anwenden der ausgewählten Vektoren auf das erste 3D-Modell und Überprüfen, ob die Vektoren gemeinsame Punkte des ersten 3D-Modells mit dem zweiten 3D-Modell auf gemeinsame Punkte des zweiten 3D-Modells mit dem ersten 3D-Modell im Wesentlichen abbilden,
h. wenn das Überprüfen aus Schritt g. erfolgreich ist, Verwenden der ausgewählten Vektoren als Basis für das Erzeugen einer vollständigen Transformation des ersten 3D-Modells zu einem Koordinatensystem des zweiten Modells,
j. wenn das Überprüfen aus Schritt g. nicht erfolgreich ist, Verwerfen aller Vektoren und wiederholen des Verfahrens mit anderen, insbesondere neuen, Daten zu wenigstens einem der 3D-Modelle.

2. Verfahren nach Anspruch 1, **dadurch gekennzeichnet, dass** wenigstens eines der 3D-Modelle in Form einer Truncated Signed Distance Function (TSDF) notiert ist.

3. Verfahren nach Anspruch 2, **dadurch gekennzeichnet, dass** die TSDF vor dem Durchführen des Verfahrens vereinfacht wird.

4. Verfahren nach einem der Ansprüche 1 bis 3, **dadurch gekennzeichnet, dass** das Beschreiben in Schritt b. in Form eines dreiunddreißig-dimensionalen Vektors erfolgt.

5. Verfahren nach einem der Ansprüche 1 bis 4, **dadurch gekennzeichnet, dass** die neuen Daten in Schritt j. durch das Hinzufügen neuer Oberflächeninformationen zu wenigstens einem der 3D-Modelle gewonnen werden.

6. Verfahren nach einem der Ansprüche 1 bis 5, **dadurch gekennzeichnet, dass** das Erzeugen in Schritt h. mittels eines Iterative Closest Point Algorithmus (ICP) erfolgt, dass ein ICP-Fehler bestimmt wird, dass ein Grenzwert für den ICP-Fehler festgelegt wird und dass bei Überschreiten des Grenzwertes Schritt j. folgt.
